# EUROPEAN PATENT SPECIFICATION

(11) **EP 2 672 610 B1**
(45) Date of publication and mention of the grant of the patent: **07.04.2021**
(21) Application number: 12171251.7
(22) Date of filing: 08.06.2012
(51) Int. Cl.: H02K 1/14, H02K 7/18

(54) **Modular stator and method of manufacturing the same**
Modularer Stator und dessen Herstellungsverfahren
Stator segmenté et procédé de son fabrication

(43) Date of publication of application: 11.12.2013
(73) Proprietor: Flender GmbH, 46395 Bocholt (DE)
(72) Inventor: Madsen, Anders Jakob, 7800 Skive (DK); Valbjoern, Jesper, 6000 Kolding (DK)
(74) Representative: Maier, Daniel Oliver

(56) References cited:
- EP-A1- 0 175 075
- EP-A1- 2 282 397
- WO-A1-98/20595
- US-A1- 2012 133 145

## Description

### Field of the Invention

The present invention relates to the field of segmented stators. Furthermore the invention relates to a generator comprising a segmented stator and to a method of fastening segments of a segmented stator.

### Art Background

In general, one main driver for the performance of a generator is the airgap between rotor and stator as well as the segment to segment distances between the adjusted segments of the stator or rotor of the generator. One of the key issues to maintain the segment to segment distance within specification is to secure the correct position of the generator segments on the stator plate. Furthermore, movements between two adjacent segments should be avoided since such movements will cause vibrations of the generator components resulting in fatique. Hence, a defined segment to segment distance between segments is indispensable to ensure a balanced movement of the rotor.

A known solution is the interconnection of the segments of the stator or rotor by a through bolt with a nut. Due to tolerances of the single segments the respective segment to segment distances may vary between the respective pairs of segments. The segment to segment distance between two adjacent segments is compensated by a selection of shims. However, this procedure is quite complicated since the operator has to carry a full set of shims in different sizes inside the generator during assembly.

EP 0175 075 A1 refers to an electrical machine with a laminated core which has axially extending grooves distributed over the entire circumference on its outside and is suspended there in a housing by means of wedges which extend in the longitudinal direction thereof, the wedges extending with parallel to them, wedge carriers fixed to the housing are connected, characterized in that the wedge is constructed in several parts and a central middle part, which is detachably connected to the wedge carrier, and lateral, axially actuable clamping means running completely within said grooves.

WO 98/20595 A1 discloses a stator for a rotating electric machine, comprising a stator, with a stator core and a winding, and a rotor, wherein said stator core is provided with stator teeth extending radially inwards, towards said rotor, characterized in that each stator tooth is configured as a number of tooth sections joined axially into a stator tooth plank and that a number of stator tooth planks are fitted together side by side thus forming a section of a stator core or a complete stator core.

EP 2 282 397 A1 refers to a method of activating an electric machine having a stator, and a rotor which rotates about an axis with respect to the stator; the stator having a plurality of stator segments arranged about the axis; the rotor having modules made of magnetizable material and arranged about the axis; and the method including the steps of connecting the rotor to the stator by means of a bearing; and magnetizing the modules of magnetizable material when the rotor is connected to the stator.

US 2012/133145 A1 relates to wind power generation systems having a segmented stator with a structural element and a plurality of coils. The wind power generation systems also include a rotor adapted to be rotated by wind to induce current in the plurality of coils and a lamination stack having a plurality of lamination plates disposed about the plurality of coils and a dovetail recess formed in the lamination stack. The wind power generation systems also include a dovetail bar adapted to be received by the dovetail recess and adjusted by a bolt to engage the lamination stack and the structural element of the segmented stator to form a torque transfer interface. Torque is adapted to be transferred from the lamination stack to the segmented stator via friction at the interface.

Thus, there may be a need to provide a segmented stator which enables the interconnection of segments of a stator or a rotor in an effective way. Moreover, there may be a need for a method for fastening of segments from a segmented stator, wherein the segments can be assembled and calibrated in an easy way. Additionally, there may be a need to maintain a predetermined segment to segment distance between segments of a stator or rotor of a generator to enable a desirable performance.

### Summary of the Invention

This need may be met by the subject matter according to the independent claims. Advantageous embodiments of the present invention are described by the dependent claims.

According to the embodiment a segmented stator is provided comprising a first segment, a second segment, a bolt adapted for fastening the first segment and the second segment to each other, and a plurality of spacers adapted for adjusting a segment to segment distance between the first and second segments (in particular, between the fastened first and second segments) wherein a first end of the first segment comprises a first hole for inserting the bolt and a plurality of further holes each of the further holes being adapted to receive a respective one of the plurality of spacers, wherein a second end of the second segment comprises a second hole for fastening the first and second segments to each other, and wherein the segment to segment distance is adjusted by a portion of a spacer of the plurality of spacers which portion protrudes out of a respective one of the plurality of further holes into the segment to segment distance between the first segment and the second segment.

In particular, the plurality of spacers may comprise 2, 3, 4 or more spacers. In particular, the stator may be a stator of a generator or an engine.

According to a further aspect there is provided a generator comprising a stator according to an exemplary aspect and a rotor.

In particular, the term "segment to segment distance" may denote the distance between the first and the second segments and is defined by the distance between the end or edge of the first segment and the end or edge of the second segment neighboring the end of the first segment.

According to a further aspect there is provided a method of fastening segments of a stator to each other, the method comprising providing a first segment and a second segment, fastening the first and second segment to each other by inserting a bolt into a first hole of the first segment and a second hole of the second segment, adjusting a segment to segment distance between the first and second segments by adjusting a portion of a spacer protruding out of a respective one on a plurality of further holes formed in the first segment into the segment to segment distance between the first and the second segments.

A method for fastening segments of a stator to each other is provided. In order to ensre a high performance of e.g. a generator, which may be realized by ensuring less vibrations, a correct position of the segments of the stator should be clearly kept in mind. Therefore, between two adjacent segments a segment to segment distance of a defined thickness may be provided. For providing this defined segment to segment distance an elaborated method for fastening the segments to each other is necessary. This method may be realized by a combination of a bolt with spacers. When all parts are assembled, two segments are held together by a bolt and spacers, which can for example be hexagonal socket set screws, which are inserted into one of the segments. A protruding portion of the spacers reaching out of the segment may calibrate the distance of the above mentioned segment to segment distance. The spacers according to an exemplary embodiment additionally may also be premounted on the segments. Hence, standardized segments with premounted spacers may be used and the assembling process may be simplified.

This aspect is based on the idea that instead of using a selection of shims the segment to segment distance between two segments is compensated by one or more spacers. To assist the assembly process these spacers may be premounted by the supplier of the segment while there is good access. During assembly of the generator the operator would only have to pretighten the spacers and afterwards tighten the bolt to the specified torque. The solution may easily be implemented since it might only be a machining variant. Samples for design verification may be made from existing standardized elements.

In the following further exemplary embodiments of the segmented stator will be described. However the described embodiments also apply for the generator and the method of fastening segments of a stator to each other.

According to an exemplary embodiment of the segmented stator a second end of the first segment is formed equal to the second end of the second segment.

In particular, if one single segment comprises a first end having a first hole for inserting the bolt and a plurality of further holes for inserting the spacers, and a second end having a second hole for fastening the first and second segments to each other by the bolt, a single or common design of segments may be used for fastening two of them to each other.

According to the embodiment of the segmented stator an end of at least one of the plurality of spacers abuts a surface of the second segment. In particular, the plurality of spacers may comprise 2, 3, 4 or more spacers.

In particular, the surface of the second segment onto which the at least one spacer abuts defines one side of the segment to segment distance. The spacer may ensure that the two segments cannot be brought closer together than the protrusion of the spacer allows.

According to the embodiment of the segmented stator the plurality of further holes are arranged on a circle around the first hole, wherein a center of the circle is placed on the rotation axis of the first hole.

In particular, the respective further holes or the spacers are arranged on a circle around the first hole and exhibit equal distances between each other, e.g. an arrangement of two spacers exhibits an angle of 180° between each other, an arrangement of 3 spacers exhibits an angle of 120° between each other and so on.

According to an exemplary embodiment of the segmented stator the spacers are socket head screws.

In particular, spacers can be realized for example by hexagonal socket set screws or threaded pins. Therefore, the further holes may be threaded holes. The provision of the threaded holes may ensure that the screws inserted into the same may not easily dislocate or shift.

According to an exemplary embodiment of the segmented stator the first hole of the first segment is free from threads.

In particular, the first hole may be a drilled hole. In particular, the further holes and/or the first and/or the second holes may be threaded holes or thread free drill holes. For example, the term "hole" may denote a through hole or a blind hole.

According to an exemplary embodiment of the segmented stator the second hole of the second segment is a threaded hole. In particular, the bolt may be threaded or may have windings, e.g. on the end opposite to the screw head.

According to an exemplary embodiment of the segmented stator the second hole of the second segment is free of threads. In particular, the stator may comprise a counter nut to fasten the bolt to the two segments. The second hole may be designed as a drill hole, for example.

According to an exemplary embodiment, the segmented stator comprises a plurality of first and second segments. In particular, a complete stator comprises six segments, three first segments and three second segments. All of these segments may be formed equal.

Summarizing it may be said that in a segmented stator according to an exemplary embodiment a first segment and an adjacent second segment may be interconnected to each other by a bolt and a plurality of spacers so that a segment to segment distance between these two segments may be defined or calibrated. In particular, in an assembled state a protruding portion of the spacers, which is reaching out of the first segment, may calibrate the distance of the above mentioned segment to segment distance. According to an exemplary embodiment the spacers may also be premounted on the segments. Hence, standardized segments with premounted segments may be used and the assembling process may be simplified.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Figure 1 schematically shows two segments fastened to each other by a bolt according to an exemplary embodiment.
Figure 2 schematically shows a detailed cross-section of the embodiment of Figure 1.

### Detailed Description

The illustration in the drawing is schematically. It is noted that in different figures, similar or identical elements are provided with the same reference signs or with reference signs, which are different from the corresponding reference signs only within the first digit.

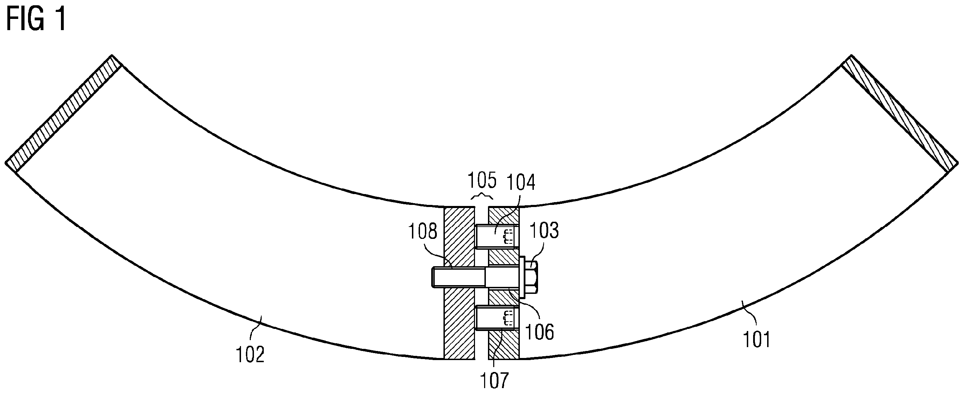

Figure 1 in particular shows two segments 101, 102 fastened to each other by a bolt 103 according to an exemplary embodiment. A first segment 101 and a second segment 102 of a stator are connected by a bolt 103 with a counter nut, wherein the bolt 103 is inserted through a first hole 106 in the first segment 101 and a second hole 108 in the second segment 102. Additionally in the exemplary embodiment two spacers 104 are inserted into further holes 107, which are threaded, in the first segment 101. The length of the spacers 104 protruding out of the first segment 101 again may be adjusted by windings of the threaded further holes 107. Thus, the protruding portion of the spacers 104 reaching out of the segment may calibrate the segment to segment distance 105 or distance between the first and the second segments 101, 102.

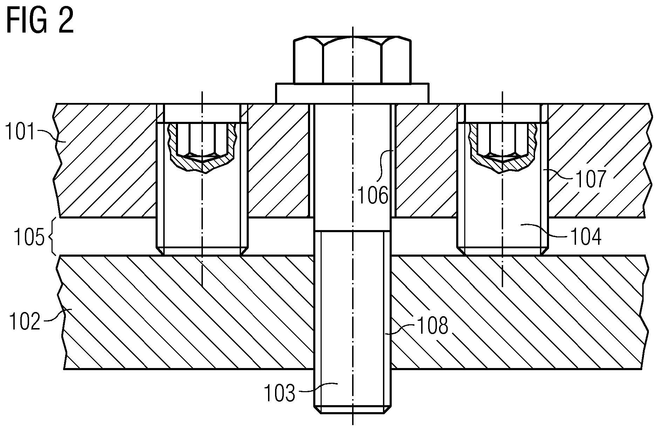

Figure 2 schematically shows a cross-section of the embodiment of connected segments of Figure 1. In particular, Figure 2 shows the fastening of the two segments in detail. For fastening adjacent segments, the bolt 103 is inserted into the first hole 106 of the first segment 101 and the second hole 108 of the second segment 102. There may be different techniques to achieve the fastening of this interconnection, such as using a bolt 103 in combination with a nut as counterpart. Therefore the second hole 108 may be designed as a drill hole without windings. Alternatively the second hole 108 of the second segment 102 may comprise windings and the second segment 102 may be linked by a different type of bolt 103 having windings, e.g. a threaded bolt. For adjusting the segment to segment distance 105 between the first and second segments 101, 102 a plurality of spacers 104 is applied. Additionally, spacers 104 offer the possibility to calibrate and maintain the segment to segment distance 105. Thus, the segment to segment distance 105 is adjustable by a portion of the spacers 104, which protrude out of further holes 107 into the segment to segment distance 105 between the first and the second segments 101, 102. The portion of the spacers 104 being in the segment to segment distance 105 defines the minimal segment to segment distance 105. The plurality of spacers 104 is a quantity of at least two respective spacers, which are arranged in a circle around the bolt and inserted in the further holes 107 of the first segment 101. The spacers 104 can be realized for example by hexagonal socket set screws, as shown in Figure 2 or threaded pins. In particular, in assembled state the bolt 103 is fastened and presses the first and second segments 101, 102 to each other, while the spacers 104 get loaded under compression and maintain the segment to segment distance 105.

The described exemplary embodiment may enable an effective assembling of a stator and/or of a generator or motor the stator is used in.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. A segmented stator comprising:
a first segment (101);
a second segment (102);
a bolt (103) adapted for fastening the first segment (101) and the second segment (102) to each other, and
a plurality of spacers (104) adapted for adjusting a segment to segment distance (105) between the first segment and the second segment (101, 102),
wherein a first end of the first segment (101) comprises a first hole (106) adapted for inserting the bolt (103) and a plurality of further holes (107), each of the further holes (107) being adapted to receive a respective one of the plurality of spacers (104);
wherein a second end of the second segment (102) comprises a second hole (108) adapted for inserting the bolt (103) and for fastening the first segment and second segment (101, 102) to each other;
wherein the segment to segment distance (105) is adjusted by a portion of a spacer of the plurality of spacers (104) which portion protrudes out of a respective one of the plurality of further holes into the segment to segment distance (105) between the first segment (101) and the second segment (102); and
**characterized in that** the plurality of further holes (107) are arranged on a circle around the first hole (106), wherein a center of the circle is placed on the rotation axis of the first hole (106).

2. The segmented stator according to claim 1, wherein a second end of the first segment (101) is formed equal to the second end of the second segment (102).

3. The segmented stator according to claim 1 or 2, wherein an end of at least one of the plurality of spacers (104) abuts a surface of the second segment (102).

4. The segmented stator according to any one of the claims 1 to 3, wherein the segment to segment distance (105) is larger than zero.

5. The segmented stator according to any one of the claims 1 to 4, wherein the spacers (104) are socket head screws.

6. The segmented stator according to any one of the claims 1 to 5, wherein the first hole (106) of the first segment (101) is free of threads.

7. The segmented stator according to any one of the claims 1 to 6, wherein the second hole (108) of the second segment (102) is a threaded hole.

8. The segmented stator according to any one of the claims 1 to 6, wherein the second hole (108) of the second segment (102) is free of threads.

9. The segmented stator according to any one of the claims 1 to 8, further comprising a plurality of first segments and second segments (101, 102).

10. A generator comprising:
a segmented stator according to any one of the claims 1 to 9, and
a rotor.

11. A method of fastening segments of a segmented stator according to any one of the claims 1 to 9, the method comprising:
providing a first segment (101) and a second segment (102) ;
fastening the first segment and the second segment (101, 102) to each other by inserting a bolt (103) into a first hole (106) of the first segment (101) and into a second hole (108) of the second segment (102);
adjusting a segment to segment distance (105) between the first segment and the second segment (101, 102) by adjusting a portion of a spacer (104) which protrudes out of a respective one of a plurality of further holes (107) formed in the first segment (101) and arranged on a circle around the first hole (106), wherein a center of the circle is placed on the rotation axis of the first hole (106), into the segment to segment distance (105) between the first segment and the second segment (101, 102).

## Patentansprüche

1. Segmentierter Stator, der Folgendes umfasst:
ein erstes Segment (101),
ein zweites Segment (102),
einen Bolzen (103), der zum Befestigen des ersten Segments (101) an dem zweiten Segment (102) ausgelegt ist, und
mehrere Abstandhalter (104), die zum Anpassen eines Segmentabstands (105) zwischen dem ersten und dem zweiten Segment (101, 102) ausgelegt sind,
wobei ein erstes Ende des ersten Segments (101) ein erstes Loch (106), das zum Einführen des Bolzens (103) ausgelegt ist, und mehrere weitere Löcher (107) umfasst, von denen jedes zum Aufnehmen eines der mehreren Abstandhalter (104) ausgelegt ist,
wobei ein zweites Ende des zweiten Segments (102) ein zweites Loch (108) umfasst, das zum Einführen des Bolzens (103) und zum Befestigen des ersten Segments an dem zweiten Segment (101, 102) ausgelegt ist,
wobei der Segmentabstand (105) durch einen Teil eines der mehreren Abstandhalter (104) angepasst wird, der aus einem jeweiligen der mehreren weiteren Löcher in den Segmentabstand (105) zwischen dem ersten Segment (101) und dem zweiten Segment (102) vorsteht, und
**dadurch gekennzeichnet, dass**
die mehreren weiteren Löcher (107) in einem Kreis um das erste Loch (106) herum angeordnet sind, wobei ein Mittelpunkt des Kreises auf der Rotationsachse des ersten Lochs (106) liegt.

2. Segmentierter Stator nach Anspruch 1, wobei ein zweites Ende des ersten Segments (101) genauso geformt ist wie das zweite Ende des zweiten Segments (102).

3. Segmentierter Stator nach Anspruch 1 oder 2, wobei ein Ende mindestens eines der mehreren Abstandhalter (104) an einer Oberfläche des zweiten Segments (102) anliegt.

4. Segmentierter Stator nach einem der Ansprüche 1 bis 3, wobei der Segmentabstand (105) größer ist als null.

5. Segmentierter Stator nach einem der Ansprüche 1 bis 4, wobei es sich bei den Abstandhaltern (104) um Innensechskantschrauben handelt.

6. Segmentierter Stator nach einem der Ansprüche 1 bis 5, wobei das erste Loch (106) des ersten Segments (101) kein Gewinde aufweist.

7. Segmentierter Stator nach einem der Ansprüche 1 bis 6, wobei das zweite Loch (108) des zweiten Segments (102) ein Gewindeloch ist.

8. Segmentierter Stator nach einem der Ansprüche 1 bis 6, wobei das zweite Loch (108) des zweiten Segments (102) kein Gewinde aufweist.

9. Segmentierter Stator nach einem der Ansprüche 1 bis 8, der ferner mehrere erste und zweite Segmente (101, 102) umfasst.

10. Generator, der Folgendes umfasst:
einen segmentierten Stator nach einem der Ansprüche 1 bis 9 und
einen Rotor.

11. Verfahren zum Befestigen von Segmenten eines segmentierten Stators nach einem der Ansprüche 1 bis 9, das Folgendes umfasst:
Bereitstellen eines ersten Segments (101) und eines zweiten Segments (102),
Befestigen des ersten Segments (101) an dem zweiten Segment (102) durch Einführen eines Bolzens (103) in ein erstes Loch (106) des ersten Segments (101) und in ein zweites Loch (108) des zweiten Segments (102),
Anpassen eines Segmentabstands (105) zwischen dem ersten und dem zweiten Segment (101, 102) durch Anpassen eines Teils eines Abstandhalters (104), der aus einem jeweiligen der mehreren weiteren Löcher (107), die in dem ersten Segment (101) gebildet und in einem Kreis um das erste Loch (106) herum angeordnet sind, wobei ein Mittelpunkt des Kreises auf der Rotationsachse des ersten Lochs (106) liegt, in den Segmentabstand (105) zwischen dem ersten und dem zweiten Segment (101, 102) vorsteht.

## Revendications

1. Stator segmenté comprenant :
un premier segment (101) ;
un deuxième segment (102) ;
un boulon (103) conçu pour fixer le premier segment (101) et le deuxième segment (102) l'un à l'autre, et
une pluralité d'entretoises (104) conçue pour régler une distance (105) de segment à segment entre le premier segment et le deuxième segment (101, 102),
dans lequel une première extrémité du premier segment (101) comprend un premier trou (106) conçu pour insérer le boulon (103) et une pluralité d'autres trous (107), chacun des autres trous (107) étant conçu pour recevoir l'une respective de la pluralité d'entretoises (104) ;
dans lequel une deuxième extrémité du deuxième segment (102) comprend un deuxième trou (108) pour insérer le boulon (103) et pour fixer le premier segment et le deuxième segment (101, 102) l'un à l'autre ;
dans lequel la distance (105) de segment à segment est réglée par une partie d'une entretoise de la pluralité d'entretoises (104), laquelle partie fait saillie de l'un respectif de la pluralité d'autres trous dans la distance (105) de segment à segment entre le premier segment (101) et le deuxième segment (102) ; et
**caractérisé en ce que**
la pluralité d'autres trous (107) sont disposés sur un cercle autour du premier trou (106), un centre du cercle étant placé sur l'axe de révolution du premier trou (106).

2. Stator segmenté suivant la revendication 1, dans lequel une deuxième extrémité du premier segment (101) est formée égale à la deuxième extrémité du deuxième segment (102).

3. Stator segmenté suivant la revendication 1 ou 2, dans lequel une extrémité d'au moins l'une de la pluralité d'entretoises (104) bute sur une surface du deuxième segment (102) .

4. Stator segmenté suivant l'une quelconque des revendications 1 à 3, dans lequel la distance (105) de segment à segment est plus grande que zéro.

5. Stator segmenté suivant l'une quelconque des revendications 1 à 4, dans lequel les entretoises (104) sont des vis à tête creuse.

6. Stator segmenté suivant l'une quelconque des revendications 1 à 5, dans lequel le premier trou (106) du premier segment (101) n'a pas de filet.

7. Stator segmenté suivant l'une quelconque des revendications 1 à 6, dans lequel le deuxième trou (108) du deuxième segment (102) est un taraudage.

8. Stator segmenté suivant l'une des revendications 1 à 6, dans lequel le deuxième trou (108) du deuxième segment (102) n'a pas de filet.

9. Stator segmenté suivant l'une quelconque des revendications 1 à 8, comprenant en outre une pluralité de premiers segments et de deuxièmes segments (101, 102).

10. Générateur comprenant :
un stator segmenté suivant l'une quelconque des revendications 1 à 9, et
un rotor.

11. Procédé de fixation de segments d'un stator segmenté suivant l'une quelconque des revendications 1 à 9, procédé dans lequel :
on se procure un premier segment (101) et un deuxième segment (102) ;
on fixe le premier segment et le deuxième segment (101, 102) l'un à l'autre en insérant un boulon (103) dans un premier trou (106) du premier segment (101) et dans un deuxième trou (108) du deuxième segment (102) ;
on règle une distance (105) de segment à segment entre le premier segment et le deuxième segment (101, 102) en réglant une partie d'une entretoise (104) qui fait saillie de l'un respectif d'une pluralité d'autres trous (107) formés dans le premier segment (101) et disposés sur un cercle autour du premier trou (106), un centre du cercle étant placé sur l'axe de révolution du premier trou (106), dans la distance (105) de segment à segment entre le premier segment et le deuxième segment (101, 102).
